# EUROPÄISCHE PATENTANMELDUNG

(11) **EP 4 674 591 A1**
(43) Veröffentlichungstag der Anmeldung: **07.01.2026**
(21) Anmeldenummer: 25183072.5
(22) Anmeldetag: 16.06.2025
(51) Int. Cl.: B29C 45/52, B29C 48/255

(54) **RÜCKSTROMSPERRE FÜR EINE PLASTIFIZIEREINHEIT**

(30) Priorität: 04.07.2024 DE 102024119049
(71) Anmelder: Inmex GmbH, 53721 Siegburg (DE)
(72) Erfinder: IFLAND, Axel, 53757 Sankt Augustin (DE); DERICHS, Niklas, 56412 Nentershausen (DE); HOFFMANN, Jan, 53797 Lohmar (DE)
(74) Vertreter: Neumann Müller Oberwalleney Patentanwälte PartG mbB

(57) **Zusammenfassung**

Rückstromsperre für eine Plastifiziereinheit aufweisend einen Schaft mit einer Längsachse, mindestens einer Längsnut und einer an einem Ende des Schaftes angeordneten Spitze; einen auf dem Schaft sitzenden Nebensperrring mit einem Außendurchmesser d1 und einer stirnseitigen Stützfläche, wobei der Nebensperrring verdrehsicher mit der Spitze verbunden, axial verschiebbar und zumindest teilweise innengeführt ist; einen axial verschiebbaren Hauptsperrring mit einer Außenfläche, einem Außendurchmesser d2 und einer stirnseitigen Anlagefläche, die gegenüber der Stützfläche abstützbar ist, wobei der Außendurchmesser d2 des Hauptsperrrings größer ist als der Außendurchmesser d1 des Nebensperrrings; einen auf dem Schaft abdichtend angeordneter Druckring, wobei ein Durchströmungskanal zwischen dem Schaft mit der Längsnut sowie dem Nebensperrring und dem Hauptsperrring ausgebildet ist, wobei der Hauptsperrring zwischen einer Offenstellung während eines Dosiervorgangs und einer Schließstellung während eines Einspritzvorgangs axial verschiebbar ist, wobei der Hauptsperrring in der Offenstellung zu dem Druckring beabstandet ist, und wobei der Hauptsperrring in der Schließstellung an dem Druckring anliegt. Plastifiziereinheit aufweisend eine Förderschnecke zur Förderung eines fließfähigen Materials; einen Zylinder mit einer Zylinderinnenfläche zur Umhausung der Förder-schnecke; eine an einem ersten Ende der Förderschnecke angeordnete Zuführvorrichtung zum Zuführen von fließfähigem Fertigungsmaterial; und eine in einem Bereich eines zweiten Endes der Förderschnecke angeordnete Düse, wobei zwischen der Düse und dem zweiten Ende der Förderschnecke eine Rückstromsperre angeordnet ist.

## Beschreibung

Die Anmeldung betrifft eine Rückstromsperre für eine Plastifiziereinheit aufweisend einen Schaft mit einer Längsachse, mindestens einer Längsnut und einer an einem Ende des Schaftes angeordneten Spitze; einen auf dem Schaft sitzenden Nebensperrring mit einem Außendurchmesser d1 und einer stirnseitigen Stützfläche, einen axial verschiebbaren Hauptsperrring mit einer Außenfläche, einem Außendurchmesser d2 und einer stirnseitigen Anlagefläche, die gegenüber der Stützfläche abstützbar ist, wobei der Außendurchmesser d2 des Hauptsperrrings größer ist als der Außendurchmesser d1 des Nebensperrrings; einen auf dem Schaft abdichtend angeordneter Druckring, wobei ein Durchströmungskanal zwischen dem Schaft mit der Längsnut sowie dem Nebensperrring und dem Hauptsperrring ausgebildet ist, wobei der Hauptsperrring zwischen einer Offenstellung während eines Dosiervorgangs und einer Schließstellung während eines Einspritzvorgangs axial verschiebbar ist, wobei der Hauptsperrring in der Offenstellung zu dem Druckring beabstandet ist, und wobei der Hauptsperrring in der Schließstellung an dem Druckring anliegt. Die Anmeldung betrifft eine Plastifiziereinheit aufweisend eine Förderschnecke zur Förderung eines fließfähigen Materials, einen Zylinder mit einer Zylinderinnenfläche zur Umhausung der Förder-schnecke, eine an einem ersten Ende der Förderschnecke angeordnete Zuführvorrichtung zum Zuführen von fließfähigem Fertigungsmaterial und eine in einem Bereich eines zweiten Endes der Förderschnecke angeordnete Düse, wobei zwischen der Düse und dem zweiten Ende der Förderschnecke eine Rückstromsperre angeordnet ist.

Eine Rückstromsperre bildet ein wesentliches Bauteil einer Plastifiziereinheit. Die Plastifiziereinheit wiederum ist im Bereich der Fertigungstechnik Teil einer Spritzgießmaschine. Sie besteht in der Regel aus einem beheizbaren Zylinder an dessen erstem Ende fließfähiges Fertigungsmaterial der Plastifiziereinheit zugeführt und an dessen zweitem Ende das Fertigungsmaterial durch eine Düse in ein Werkzeug eingespritzt wird. Innerhalb des Zylinders ist eine Förderschnecke angeordnet, die das zugeführte Fertigungsmaterial durch den Zylinder in Richtung der Düse fördert und bei Bedarf weiter durch die Düse in das Werkzeug einspritzt.

Die Förderschnecke weist an einem der Düse zugewandten Ende die Rückstromsperre auf, die somit den Abschluss der Förderschnecke bildet und die in der Regel mit der Förderschnecke verschraubt ist. Die Rückstromsperre schließt an ihrem äußeren Umfang mit dem Kanal der Förderschnecke im Zylinder ab. Während eines Dosiervorgangs dreht sich die Förderschnecke um ihre eigene Längsachse und fördert Fertigungsmaterial, beispielsweise plastifizierten Kunststoff, aus einem Schneckenrückraum, in dem die Förderschnecke für die Fertigungsmaterialzuführung angeordnet ist, in einen Schneckenvorraum, der dem Bereich der Düse zugeordnet ist. Zwischen dem Schneckenrückraum und dem Schneckenvorraum ist die Rückstromsperre angeordnet. Die Förderschnecke treibt das fließfähige Fertigungsmaterial durch die Rückstromsperre in den Schneckenvorraum. Die Rückstromsperre befindet sich zu diesem Zweck in einer Offenstellung, sodass das Fertigungsmaterial nahezu ungehindert weiter gefördert wird, bis sich die gewünschte Menge in dem Schneckenvorraum angesammelt hat. Befindet sich die Rückstromsperre in einer Offenstellung sind der Schneckenrückraum und der Schneckenvorraum somit miteinander verbunden.

Anschließend wird die Rückstromsperre in eine Schließstellung gebracht, sodass weder Fertigungsmaterial weiter Richtung Düse noch zurück entlang der Förderschnecke fließen kann. Durch die Rückstromsperre in der Schließstellung werden Schneckenrückraum und Schneckenvorraum somit voneinander abgetrennt. Mit der Rückstromsperre in der Schließstellung kann das sogenannte Einspritzen erfolgen, bei dem die Förderschnecke als ein Kolben fungiert und translatorisch im Zylinder in Richtung Düse geschoben wird. Durch das translatorische Verschieben wird das Fertigungsmaterial zunächst verdichtet und anschließend durch die Düse eingespritzt.

Aus dem Stand der Technik sind Rückstromsperren bekannt, die eine mit Öffnungen versehene Spitze, einen Sperrring und einen Druckring aufweisen. Die Spitze weist einen Schaft auf, der mit der Förderschnecke verschraubt ist und auf dem der Sperrring und der Druckring angeordnet sind. Der Sperrring ist dabei zwischen Spitze und Druckring angeordnet und als ein hohlzylindrisches Bauteil ausgebildet, das mit seiner Außenfläche an einer Innenfläche des Zylinders anliegt. Der Druckring wird in der Regel mit der Spitze an der Förderschnecke befestigt und bildet den Übergang von der Förderschnecke auf die Rückstromsperre. In einer Offenstellung der Rückstromsperre ist der Sperrring zu dem Druckring beabstandet, sodass das Fertigungsmaterials außerhalb des Druckrings und innerhalb des Sperrrings in Richtung der Spitze gefördert wird.

In der Offenstellung liegt der Sperrring an der Spitze an, die sich durch die Verbindung mit der Förderschnecke während des Dosiervorgangs dreht. Da der Sperrring mit seiner Außenfläche auch an der Innenfläche des Zylinders anliegt, dreht sich der Sperrring nicht mit der Spitze mit, sodass regelmäßig ein Verschleiß zwischen Spitze und Sperrring auftritt. Zusätzlich tritt auch ein Verschleiß der Innenfläche des Zylinders auf. In der Schließstellung hingegen wird der Sperrring dadurch an den Druckring geschoben, dass die Förderschnecke nach vorne geschoben wird, um Fertigungsmaterial durch die Düse in ein Werkzeug einzuspritzen. In der Schließstellung kann so kein Fertigungsmaterial zwischen dem Druckring und dem Sperrring hindurch und damit durch die Rückstromsperre fließen.

Die Druckschrift WO 2010/066022 A1 offenbart eine Rückstromsperre mit einem zweiteiligen Sperrring, bei dem der vordere Teil einen kleineren Außendurchmesser hat.

Die Druckschrift US 5 945 141 A offenbart ebenfalls eine Rückstromsperre mit einem zweiteiligen Sperrring, dessen vorderer Teil einen geringeren Außendurchmesser aufweist.

Nachteilig bei der Rückstromsperre aus dem Stand der Technik ist der hohe Verschleiß von Spitze, Sperrring und Zylinderinnenfläche, ausgelöst durch das stetige Reiben der Spitze während des Dosiervorgangs an dem Sperrring. Ferner führt die Reibung der Spitze an dem Sperrring auch zu einer Reibung des Sperrrings an der Zylinderinnenfläche, sodass auch diese einem gewissen Verschleiß unterliegt. Da die Rückstromsperre im Verschleißfall einfacher auszutauschen ist und zudem ein kostengünstigeres Bauteil als der Zylinder darstellt, ist ein erhöhter Verschleiß an der Zylinderinnenfläche zu vermeiden.

Der Verschleiß der einzelnen Bauteile beeinträchtigt den gesamten Spritzgießprozess und mindert die Qualität der hergestellten Teile. Zudem muss die Rückstromsperre aus dem Stand der Technik auf Grund des Verschleißes vergleichsweise häufig ersetzt werden. Ferner wird das Führen des Sperrrings innerhalb des Zylinders und das damit verbundene Wechseln des Sperrrings zwischen der Offenstellung und der Schließstellung negativ beeinträchtigt, wenn der Sperrring oder der Zylinder in einem gewissen Maße verschlissen sind.

Es ist daher eine Aufgabe der vorliegenden Erfindung, eine Rückstromsperre für eine Plastifiziereinheit bereitzustellen, die eine gesteigerte Verschleißbeständigkeit aufweist.

Zur Lösung der Aufgabe wird eine Rückstromsperre gemäß Anspruch 1 vorgeschlagen. In den Unteransprüchen sind weitere Ausführungsformen und Weiterbildungen angegeben.

Die Rückstromsperre für eine Plastifiziereinheit weist einen Schaft mit einer Längsachse, mindestens eine Längsnut und eine an einem Ende des Schaftes angeordneten Spitze auf. Die Rückstromsperre weist zudem einen zumindest abschnittsweise axial entlang des Schafts verschiebbaren Nebensperrring mit einem Außendurchmesser d1 und einer stirnseitigen Stützfläche auf, wobei der Nebensperrring verdrehsicher mit der Spitze verbunden ist sowie einen axial verschiebbaren Hauptsperrring mit einer Außenfläche, einem Außendurchmesser d2 und einer stirnseitigen Anlagefläche, die gegenüber der Stützfläche abstützbar ist, wobei der Außendurchmesser d2 des Hauptsperrrings größer ist als der Außendurchmesser d1 des Nebensperrrings. Ferner weist die Rückstromsperre einen auf dem Schaft abdichtend angeordneten Druckring auf, wobei der Druckring axial benachbart zu dem Hauptsperrring angeordnet ist, wobei ein Durchströmungskanal zwischen dem Schaft mit der Längsnut sowie dem Nebensperrring und dem Hauptsperrring ausgebildet ist, wobei der Hauptsperrring zwischen einer Offenstellung während eines Dosiervorgangs und einer Schließstellung während eines Einspritzvorgangs axial verschiebbar ist, wobei der Hauptsperrring in der Offenstellung zu dem Druckring beabstandet ist, und wobei der Hauptsperrring in der Schließstellung an dem Druckring anliegt.

Die erfindungsgemäße Rückstromsperre bietet den Vorteil, dass die Spitze, der Nebensperrring und der Hauptsperrring verschleißarm ausgestaltet sind. Dadurch weist die Rückstromsperre eine deutlich höhere Lebensdauer auf, wodurch der Ersatzteilbedarf reduziert, und die Standzeit erhöht wird. Zudem bedarf es nicht mehr des Austauschs des Sperrrings und der Spitze, wie bei der Rückstromsperre aus dem Stand der Technik. Vielmehr ist ein dezidierter Austausch des am meisten vom Verschleiß betroffenen Bauteils, etwa des Nebensperrrings oder des Hauptsperrrings, möglich, wodurch eine Wartung einfach und kostengünstig durchgeführt werden kann. Ferner bietet die erfindungsgemäße Rückstromsperre bei geringem Verschleiß eine verbesserte Führung innerhalb des Zylinders, wodurch die Qualität der zu fertigenden Bauteile erhöht und die Ausschussrate verringert wird.

Die erfindungsgemäße Rückstromsperre weist einen Schaft mit einer Längsachse und mindestens einer Längsnut auf. Dabei weist der Schaft eine Mantelfläche auf, kann länglich zylindrisch und folglich mit einem kreisrunden Querschnitt ausgestaltet sein, wobei sich die Längsachse durch einen Mittelpunkt des kreisförmigen Querschnitts und parallel zu der Mantelfläche erstrecken kann. Die Rückstromsperre ist über den Schaft mit einer Förderschnecke einer Plastifiziereinheit verbindbar und dreht sich im Betrieb während eines Dosiervorgangs gemeinsam mit der Förderschnecke.

Die mindestens eine Längsnut erstreckt sich dabei im Wesentlichen parallel zu der Längsachse, an der Mantelfläche des Schaftes entlang und geht in die Spitze über, da der Schaft und die Spitze ein Bauteil bilden. Der Schaft kann auch mehrere Längsnuten, beispielsweise in Umfangsrichtung des Schaftes gleichmäßig verteilt angeordnete Längsnuten, aufweisen. Insbesondere kann der Schaft drei Längsnuten aufweisen, die in Umfangsrichtung und entlang der Mantelfläche des Schaftes gleichmäßig um jeweils 120° versetzt sind. Eine derartige Anordnung von Längsnuten hat sich als besonders vorteilhaft für die Reduzierung von Unwuchten während eines Dosiervorgangs herausgestellt, sodass die Rückstromsperre besonders gleichmäßig um die Längsachse dreht.

Der Nebensperrring weist eine stirnseitige Stützfläche auf, wobei stirnseitig als orthogonal zu einer Mantelfläche des Nebensperrrings zu verstehen ist. Die stirnseitige Stützfläche ist dabei an einer der Spitze abgewandten Seite angeordnet und ist somit in Richtung des Hauptsperrrings gerichtet. Der Nebensperrring ist verdrehsicher mit der Spitze verbunden, axial verschiebbar und zumindest teilweise innengeführt. Durch die verdrehsichere Verbindung entsteht nahezu kein Verschleiß an den Grenzflächen von Spitze und Nebensperrring. Ferner weist der Nebensperrring den Außendurchmesser d1 auf. Die teilweise verwendete Formulierung, dass der Nebensperrring auf dem Schaft sitzt, ist derart zu verstehen, dass sich der Schaft durch eine mittige Aussparung, die naturgemäß jeder Ringaufweist, erstreckt.

Die Innenführung des Nebensperrrings kann beispielsweise über einen Formschluss mit dem Schaft realisiert sein. Die Innenführung bewirkt, dass der Nebensperrring eine verbesserte Zentrierung aufweist, wodurch ein präziseres Verschieben in axialer Richtung ermöglicht wird. Die Innenführung bietet ferner den Vorteil, dass durch das Zentrieren der Nebensperrring und der Hauptsperrring in der Schließstellung präziser dichtend aneinander in Anlage gebracht werden können.

Innengeführt ist im Sinne der Anmeldung als eine radiale Führung und Zentrierung des Nebensperrrings oder eines beliebigen Rings durch seine Innenfläche zu verstehen, beispielsweise indem die Innenfläche auf dem Schaft geführt ist. Für jeden innengeführten Ring kann gegenüber dem Schaft eine Passung mit Spiel vorgesehen sein, beispielsweise als Schiebesitz oder Gleitsitz bezeichnete Passungen, die es erlauben, dass der Ring axial verschoben werden kann. Derartige Passungen sind dem Fachmann beispielsweise als H7/g6, H7/h6 oder H8/h9 bekannt. Diese Passungen stellen sicher, dass der Ring nicht klemmt und leicht axial bewegt werden kann, ohne zu viel Spiel zu haben.

Ferner ist unter dem Ausdruck "axial" zu verstehen, dass die Führung des Nebensperrrings entlang einer Parallelen zu der Längsachse des Schaftes erfolgt. Die "Innenführung" des Nebensperrrings meint, dass der Nebensperrring an seiner Innenseite geführt wird. Also mit der Seite, die der Mantelfläche des Schaftes zugewandt und parallel zu dieser Mantelfläche angeordnet ist. Dabei hat die Innenführung des Nebensperrrings nicht über die gesamte Innenfläche zu erfolgen. Beispielsweise ist bereits auf Grund der mindestens einen Längsnut in dem Schaft nur ein Teilbereich der gesamten Innenfläche des Nebensperrrings mit der Mantelfläche des Schaftes in Kontakt.

Auf dem Schaft mit der Spitze und dem Nebensperrring sitzt ferner der Hauptsperrring, der eine Außenfläche und eine stirnseitige Anlagefläche aufweist. Als Außenfläche ist dabei eine Mantelfläche des Hauptsperrrings zu verstehen, die einer Zylinderinnenfläche zugewandt ist, die die Rückstromsperre umhaust. Die Außenfläche und die stirnseitige Anlagefläche des Hauptsperrrings können dabei orthogonal zueinander angeordnet sein, wobei die Anlagefläche des Hauptsperrrings und die stirnseitige Stützfläche des Nebensperrrings im Wesentlichen parallel und gegenüberliegend zueinander angeordnet sind. Mit anderen Worten kontaktiert der Hauptsperrring mit der Anlagefläche die Stützfläche des Nebensperrrings. Ferner weist der Hauptsperrring einen Außendurchmesser d2 auf.

Da erfindungsgemäß der Außendurchmesser d1 des Nebensperrrings kleiner ist als der Außendurchmesser d2 des Hauptsperrrings und da die Rückstromsperre in der Regel in einem Zylinder verbaut ist, kann die Außenfläche des Hauptsperrrings an der Innenfläche des die Rückstromsperre umgebenden Zylinders anliegen, während eine Außenfläche des Nebensperrrings von der Innenfläche des die Rückstromsperre umgebenden Zylinders beabstandet ist. Die Außenfläche des Nebensperrrings und die Innenfläche bzw. die Innenwandung des Zylinders weisen somit ein Spiel zueinander auf. Dies führt dazu, dass im Betrieb der Rückstromsperre, bei dem sich sowohl die Spitze als auch der Nebensperrring drehen, der Nebensperrring auf Grund des geringeren Außendurchmessers nicht mit der Zylinderinnenfläche kontaktiert. Somit wird in vorteilhafterweise ein Verschleiß der Zylinderinnenfläche reduziert. Gleichzeitig ist der Nebensperrring mit der Spitze verdrehsicher verbunden, sodass dieser geradlinig geführt wird. Die geradlinige Führung wird ferner bedingt durch den Kontakt der Innenfläche des Nebensperrrings mit dem Schaft bzw. mit der an dem Schaft angeordneten Spitze.

Ferner sitzt auf dem Schaft abdichtend angeordnet der Druckring. Dieser kann als Distanz- oder Sitzring ausgestaltet sein und bildet den Übergang von der Förderschnecke zu der Rückstromsperre. Auch der Druckring weist ringtypisch eine Innenwandung mit einem Innendurchmesser und eine Außenwandung mit einem Außendurchmesser auf, wobei die Innenwandung dichtend an dem Schaft, bzw. an einer Schaftmantelfläche, angeordnet ist. Der Außendurchmesser des Druckrings ist derart gewählt, dass eine ausreichende Kontaktfläche zum Abdichten zwischen dem Druckring und dem Hauptsperrring bereitgestellt wird. Zudem kann dadurch ein auf den Hauptsperrring axial wirkender Druck reduziert werden.

Während des Betriebs wird das fließfähige Fertigungsmaterial zunächst von einer Zuführvorrichtung ausgehend über die Förderschnecke bis zum Druckring gefördert. Anschließend passiert das Fertigungsmaterial den Druckring entlang der Außenwandung. Da der Druckring axial benachbart zu dem Hauptsperrring angeordnet ist, kann das Fertigungsmaterial anschließend an einer Innenwandung des Hauptsperrrings entlang des Durchströmungskanals fließen.

Der Durchströmungskanal ist als ein Hohlraum ausgebildet, der von der Mantelfläche des Schafts mit der mindestens einen Längsnut einerseits und den Innenflächen des Hauptsperrrings und des Nebensperrrings andererseits umgeben ist. Vorzugsweise verläuft der Durchströmungskanal überwiegend parallel zu der Längsachse des Schaftes. Das Fertigungsmaterial kann somit nach dem Passieren des Druckrings durch den Durchströmungskanal bis zum Ende der Spitze des Schafts gefördert werden. Die mindestens eine Längsnut erstreckt sich von der Spitze aus höchstens bis an den Druckring heran und kann beispielsweise von der Spitze in Richtung Druckring eine kontinuierlich abnehmende Tiefe aufweisen.

Der Durchströmungskanal kann in der Offenstellung geöffnet und in der Schließstellung geschlossen sein. Die jeweilige Anordnung wird durch eine axiale Verschiebung des Hauptsperrrings realisiert. Wird Fertigungsmaterial während eines Dosiervorgangs mittels der Förderschnecke über den Druckring durch den Durchströmungskanal bis in die Spitze der Rückstromsperre und anschließend in den Schneckenvorraum gefördert, so befindet sich der Hauptsperrring in der Offenstellung. Hauptsperrring und Druckring sind während des Dosiervorgangs in der Offenstellung zueinander axial beabstandet. Der Schaft kann zudem einen Anschlag aufweisen, an dem der Druckring anliegt.

Während eines Einspritzvorgangs liegt der Hauptsperrring an dem Druckring an, sodass durch das Anliegen der Durchströmungskanal verschlossen ist und das Fertigungsmaterial diesen nicht passieren kann. Der Hauptsperrring und der Druckring sind in dieser Stellung nicht mehr beabstandet, sondern dichtend zueinander angeordnet ist. In dieser Schließstellung kann weder Fertigungsmaterial in den Schneckenvorraum transportiert, noch kann es in den Schneckenrückraum entweichen. Das Entweichen des Fertigungsmaterials wird durch den Hauptsperrring verhindert, der durch die Anordnung in der Schließstellung den Durchströmungskanal verschließt. Mit dem Hauptsperrring wird in der Regel auch der Nebensperrring axial verschoben, sodass dieser weiterhin an dem Hauptsperrring anliegt, wobei der Nebensperrring dabei verdrehsicher mit der Spitze verbunden bleibt. Das Fertigungsmaterial kann in der Schließstellung bei geschlossenem Durchströmungskanal in Richtung Düse gedrückt und entsprechend eingespritzt werden. Dies kann durch ein Verschieben der nicht rotierenden Förderschnecke in Richtung der Düse erfolgen, wobei die Förderschnecke als Kolben wirkt. Das Verschieben der Förderschnecke bewirkt die Verschiebung des Hauptsperrrings an den Druckring heran.

Die erfindungsgemäße Rückstromsperre hat den Vorteil, dass diese deutlich verschleißärmer betrieben wird, da die Ausgestaltung mittels Nebensperrring und Hauptsperrring gleich mehrfach der Verschleiß an der Rückstromsperre reduziert. Zunächst wird der Verschleiß zwischen Spitze und Nebensperrring im Vergleich zu Rückstromsperren mit einem Sperrring vermindert, da bei der erfindungsgemäßen Rückstromsperre der Nebensperrring verdrehsicher mit der Spitze verbunden ist somit nur noch in vernachlässigbarer Weise mit der Spitze reibend interagiert. Die stattdessen reibend interagierende Anlagefläche und Stützfläche bilden weiterhin eine vergrößerte und somit langlebigere Verschleißfläche, verglichen mit einer Fläche zwischen der Spitze und einem einzelnen Sperrring. Ferner ist ein Verschleiß zwischen Nebensperrring und der Innenfläche des Zylinders nahezu ausgeschlossen, da der Nebensperrring durch den im Vergleich zum Hauptsperrring kleineren Außendurchmesser nicht mit der Innenfläche des Zylinders kontaktiert. Es ist somit konstant ein Spiel zwischen der Innenfläche des Zylinders und einer Außenfläche des Nebensperrrings vorhanden. Zudem wird auch der Verschleiß zwischen Hauptsperrring und Zylinder reduziert, da der Hauptsperrring nur geringfügig mit der Spitze und dem Nebensperrring rotiert. Die erfindungsgemäße Rückstromsperre weist somit ein verbessertes Verschleißverhalten auf und ist dadurch besonders nachhaltig konstruiert.

Gemäß einer Ausführungsform ist der Hauptsperrring zumindest teilweise axial entlang des Schaftes innengeführt. Die Innenführung des Hauptsperrrings kann beispielsweise über einen Formschluss mit dem Schaft realisiert werden. Die Innenführung bewirkt, dass der Hauptsperrring eine verbesserte Zentrierung aufweist, wodurch ein präziseres Verschieben von der Offenstellung in die Schließstellung ermöglicht wird. Das Einspritzen kann somit genauer und zielgerichteter erfolgen. Die Innenführung bietet ferner den Vorteil, dass durch das Zentrieren der Hauptsperrring und der Druckring in der Schließstellung präziser dichtend aneinander in Anlage gebracht werden können. Der Durchströmungskanal ist somit in der Schließstellung besonders zuverlässig durch den Hauptsperrring verschlossen.

Die Innenführung kann dabei entlang der gesamten axialen Erstreckung der Innenfläche des Hauptsperrrings erfolgen, also von einer dem Druckring zugewandten Fläche bis zu der dem Nebensperrring zugewandten stirnseitigen Anlagefläche. Es kann jedoch auch vorgesehen sein, dass die Innenführung nur über einen Teil der axialen Erstreckung des Hauptsperrrings erfolgt und somit nur teilweise vorliegt.

Gemäß einer weiteren Ausführungsform schließt die Längsachse des Schaftes und eine mit der Anlagefläche bzw. der Stützfläche deckungsgleiche Kegelmanteloberfläche einen spitzen Winkel ein. Der spitze Winkel kann sowohl in Richtung der Spitze als auch in Richtung des Druckrings geöffnet sein. Dies bewirkt, dass die Anlagefläche des Hauptsperrrings und die Stützfläche des Nebensperrrings nicht orthogonal gegenüber der Längsachse angeordnet sind. Durch eine derartige Anordnung werden die Anlagefläche und die Stützfläche vergrößert, sodass eine axial wirkende Kraft auf diese größere Fläche verteilt wird. Dementsprechend ist die Anlagefläche oder die Stützfläche einem reduzierten Druck ausgesetzt, wodurch der Verschleiß von Hauptsperrring und Nebensperrring vorteilhaft verringert werden kann.

Gemäß einer weiteren Ausführungsform weist die Spitze mindestens ein Flügelelement auf, wobei das mindestens eine Flügelelement den Durchströmungskanal axial unterteilt. Das mindestens eine Flügelelement kann sich dabei ausgehend von der Schaftoberfläche in radialer Richtung beispielsweise etwa bis zu einer Höhe der Außenfläche des Nebensperrrings oder darüber hinaus erstrecken.

Dem Nebensperrring gegenüber kann das mindestens eine Flügelelement eine Art Anschlag bilden, mit dem der Nebensperrring zumindest teilweise kontaktiert. Das Flügelelement bildet mit der Schaftoberfläche zusammen eine Art Hohlraum aus, der den Durchströmungskanal in axialer Richtung erweitert. Das Fertigungsmaterial kann somit von dem Durchströmungskanal weiter entlang dieses Hohlraums in Richtung Spitzenende fließen. Vorzugsweise weist die Spitze sechs Flügelelemente, besonders bevorzugt vier Flügelelemente, weiter bevorzugt drei Flügelelemente auf. Durch die mehreren Flügelelemente können die Hohlräume in Umfangsrichtung um die Längsachse symmetrisch verteilt werden, sodass während des Drehens der Rückstromsperre um die Längsachse eine Unwucht in vorteilhafterweise reduziert wird.

Gemäß einer weiteren Ausführungsform weist der Nebensperrring mindestens ein Klauenelement auf, wobei das mindestens eine Klauenelement mit dem mindestens einen Flügelelement der Spitze formschlüssig verbindbar ist. Unter Klauenelement ist im Rahmen der Erfindung ein Vorsprung zu verstehen, der an einer Frontfläche des Nebensperrrings angeordnet ist. Die Frontfläche ist dabei der Spitze zugewandt und parallel zu der stirnseitigen Stützfläche angeordnet. Das Klauenelement kann auch bis auf einen Bereich einer Aussparung entlang der gesamten Frontfläche des Nebensperrrings ausgebildet sein. Bei dieser Ausführungsform ist das Klauenelement derartig mit dem Flügelelement verbindbar, dass das Flügelelement im Bereich der Aussparung mit dem Klauenelement formschlüssig verbindbar ist. Die zumindest in Umfangsrichtung formschlüssige Verbindung kann ferner durch eine Art Ineinandergreifen von jeweils einem Klauenelement und jeweils einem Flügelelement erfolgen. Es kann in diesem Zusammenhang auch vorgesehen sein, dass mindestens ein Flügelelement nicht mit einem Klauenelement ineinandergreift. Vorzugsweise ist ein Flügelelement in Umfangsrichtung zumindest teilweise von zwei Klauenelementen flankiert. Grundsätzlich ist durch das mindestens eine Klauenelement die verdrehsichere Verbindung von Nebensperrring und Spitze besonders robust ausgestaltet.

Gemäß einer weiteren Ausführungsform weist die Rückstromsperre eine Anzahl n der Flügelelemente der Spitze und eine Anzahl m der Klauenelemente des Nebensperrrings auf, wobei die Anzahl n der Flügelelemente der Anzahl m der Klauenelemente entspricht. Bei dieser Ausführungsform ist somit jedem Flügelelement ein Klauenelement zuordenbar, sodass eine Kräfteverteilung bei der formschlüssigen Verbindung von Flügelelement und Klauenelement besonders gleichmäßig erfolgt. Die derartig ausgebildete Rückstromsperre rotiert daher mit einer reduzierten Unwucht. Alternativ kann die Rückstromsperre eine Anzahl n der Flügelelemente der Spitze und eine Anzahl m der Klauenelemente des Nebensperrrings aufweisen, wobei die Anzahl n der Flügelelemente nicht der Anzahl m der Klauenelemente entspricht. Bei dieser Ausführungsform kann beispielsweise ein Flügelelement der Spitze mit zwei Klauenelementen des Nebensperrrings formschlüssig verbunden werden, sodass die Spitze über diese Art des Formschlusses besonders stabil verbindbar ist. Es kann ferner vorgesehen sein, dass nur jedes zweite Flügelelement mit jeweils einem Flügelelement formschlüssig verbindbar ist.

Gemäß einer weiteren Ausführungsform weist die Spitze sechs Flügelelemente auf, von denen vier Flügelelemente mit vier Klauenelementen des Nebensperrrings formschlüssig verbindbar sind. Dabei können sowohl die Flügelelemente als auch die Klauenelemente in radialer Richtung unterschiedlich ausgeprägt sein. Der Formschluss von Spitze und Nebensperrring kann somit besonders vorteilhaft flexibel entsprechend einer gewünschten Ausgestaltung des Durchströmungskanals angepasst werden. Die Ausgestaltung des Durchströmungskanals kann wiederum flexibel an das jeweilige Fließverhalten des Fertigungsmaterials angepasst werden. Mit anderen Worten kann je nach Fertigungsmaterial oder Spritzgießprozess eine daran optimal angepasste Rückstromsperre verwendet werden. Dies hat zur Folge, dass sowohl der Zylinder der Plastifiziereinheit, in der die erfindungsgemäße Rückstromsperre verbaut ist, als auch die Rückstromsperre selbst einem verminderten Verschleiß ausgesetzt und somit besonders langlebig sind.

Gemäß einer weiteren Ausführungsform weist der Nebensperrring mindestens eine Bohrung auf, wobei die mindestens eine Bohrung den Durchströmungskanal erweitert. Durch die mindestens eine Bohrung wird der Nebensperrring von seiner Außenfläche, die dem Zylinder zugewandt ist, bis zu seiner Innenfläche durchdrungen, wobei die Innenfläche des Nebensperrrings dem Schaft zugewandt ist und den Durchströmungskanal mit ausbildet. Die mindestens eine Bohrung weist dabei eine Mittellinie auf, die beispielsweise orthogonal zu der Längsachse des Schaftes angeordnet ist. Die radiale Bohrung ermöglicht, dass Fertigungsmaterial, das den Durchströmungskanal durchströmt, in den Bereich gelangt, der zwischen der Außenfläche des Nebensperrrings und der Zylinderinnenfläche angeordnet ist. Dieser Bereich entsteht durch den geringeren Außendurchmesser des Nebensperrrings im Vergleich zu dem Außendurchmesser des Hauptsperrrings. Das Fertigungsmaterial, das in diesem Bereich angeordnet ist, ermöglicht eine vorteilhafte Zentrierung der Rückstromsperre, da das Fertigungsmaterial eine Art dämpfende Wirkung an der Außenfläche des Nebensperrrings gegenüber der Drehung der Rückstromsperre aufweist. Die radiale Bohrung sorgt in dem Spaltbereich zwischen dem Nebensperrring und der Zylinderwandung insbesondere für einen gewissen Materialfluss, wodurch verhindert wird, dass Fertigungsmaterial dort für längere Zeit verbleibt und thermisch geschädigt wird. Zudem wird der Durchströmungskanal durch die mindestens eine Bohrung erweitert, sodass während eines Einspritzvorgangs der Druck auf den Durchströmungskanal im Bereich des Nebensperrrings verringert wird. Vorzugsweise weist die erfindungsgemäße Rückstromsperre zwei, vier oder mehrere radiale Bohrungen auf, wobei die radialen Bohrungen über den Umfang des Nebensperrrings gleichmäßig verteilt sein können.

Gemäß einer weiteren Ausführungsform weisen bzw. weist die Stützfläche des Nebensperrring und/oder die Anlagefläche des Hauptsperrrings eine Schmiernut zur Bereitstellung eines Schmiermittels für die Stützfläche und/oder die Anlagefläche auf. Die Schmiernut kann ringförmig ausgestaltet sein und mit einem Schmiermittel befüllt werden, sodass die Reibung an der Stützfläche und/oder an der Anlagefläche durch die Schmierung reduziert wird. Ferner kann das Schmiermittel kühlend und/oder schwingungsdämpfend auf den Nebensperrring bzw. den Hauptsperrring wirken. Als Schmiermittel kann insbesondere ein durch die Rückstromsperre bzw. die Plastifiziereinheit gefördertes, fließfähiges Fertigungsmaterial wirken. Durch das Schmiermittel wird die Reibung und infolgedessen der Verschleiß des Nebensperrrings bzw. des Hauptsperrrings weiter reduziert, sodass die Rückstromsperre besonders langlebig ist.

Gemäß einer weiteren Ausführungsform weist die Schmiernut mindestens einen Zulauf und mindestens einen Ablauf zur Verteilung des Schmiermittels auf. Somit kann das Schmiermittel beispielsweise vom Schaft ausgehend über den Zulauf in die Schmiernut und damit an der Stützfläche des Nebensperrring und/oder an der Anlagefläche des Hauptsperrrings verteilt werden. Vorzugsweise sind der Zulauf und der Ablauf entlang der Außenfläche des Nebensperrrings bzw. des Hauptsperrrings um 180° zueinander versetzt. Beispielsweise kann der Zulauf eine räumliche Verbindung vom Durchströmungskanal zur Schmiernut bilden, wobei der Ablauf wiederum eine räumliche Verbindung von der Schmiernut zu der Außenfläche des Nebensperrrings bzw. des Hauptsperrrings bildet. An der Schmiernut kann somit in vorteilhafterweise durchgehend das Schmiermittel bereitgestellt werden. Ferner kann das fließfähige Fertigungsmaterial als Schmiermittelwirken, das während eines Dosiervorgangs und/oder während eines Einspritzvorgangs teilweise von dem Durchströmungskanal entlang des Zulaufs in die Schmiernut geleitet wird und über den Ablauf an die Außenfläche des Hauptsperrrings gelangt und somit auch die Außenfläche des Hauptsperrrings sowie die Zylinderinnenfläche schmieren kann. Infolgedessen sind die Zylinderinnenfläche und die Außenfläche des Hauptsperrrings einem geringeren Verschleiß ausgesetzt.

Gemäß einer weiteren Ausführungsform weisen bzw. weist die Stützfläche des Nebensperrrings und/oder die Anlagefläche des Hauptsperrrings eine Verschleißschutzschicht auf. Die Verschleißschutzschicht wird auf die Stützfläche und/oder die Anlagefläche aufgetragen und schützt diese somit vor Abrieb, Erosion, Korrosion und anderen Formen des Verschleißes. Vorzugsweise wird die Verschleißschutzschicht mittels thermischen Spritzverfahren wie Flammspritzen, Lichtbogenspritzen, Plasmaspritzen, Auftragsschweißen oder Laserstrahlbearbeitung auf die Stützfläche und/oder die Anlagefläche aufgetragen. Die Verschleißschutzschicht kann aus mindestens einem Metall, einer Keramik, einem Polymer oder einem Verbundwerkstoff bestehen, abhängig von den spezifischen Anforderungen des Einsatzes der Rückstromsperre. Weiter kann die Verschleißschutzschicht mindestens eine Hartstoffbeschichtung aufweisen, um eine verbesserte Abriebfestigkeit zu gewährleisten. Eine Hartstoffbeschichtung kann beispielsweise Hartchrom, Wolframkarbid oder eine Keramik aufweisen.

Gemäß einer weiteren Ausführungsform weist der Hauptsperrring eine geringere Härte als der Nebensperrring auf. Durch die geringere Härte ist die Anlagefläche des Hauptsperrrings einem größeren Verschleiß gegenüber der Stützfläche des Nebensperrrings ausgesetzt. Dies hat zur Folge, dass der Nebensperrring im Vergleich zu dem Hauptsperrring eine längere Lebensdauer aufweist und der Hauptsperrring somit das häufiger zu wechselnde Bauteil darstellt. Dies ist vorteilhaft, wenn der Hauptsperrring bei der Rückstromsperre aus konstruktiver Sicht das einfachere und kostengünstigere Bauteil darstellt. Dieses ist daher im Verschleißfall bevorzugt auszutauschen.

Gemäß einer weiteren Ausführungsform weist der Nebensperrring ein Material auf, das sich von dem Material des Hauptsperrrings unterscheidet. Über das Material von Hauptsperrring und Nebensperrring lassen sich unter anderem die Bauteileigenschaften beeinflussen. Beispielsweise kann der Nebensperrring aus einem Material mit einer höheren Härte gefertigt sein, im Vergleich zu einem Material mit einer geringeren Härte, aus dem der Hauptsperrring gefertigt ist. Infolgedessen wird der Verschleiß am Nebensperrring in vorteilhafter Weise reduziert.

Gemäß einer weiteren Ausführungsform bestehen der Hauptsperrring und der Nebensperrring aus unterschiedlichen Materialen, wobei der Nebensperrring auf eine erste Art wärmebehandelt wurde und der Hauptsperrring auf eine zweite Art wärmebehandelt wurde, wobei sich die erste und die zweite Art der Wärmebehandlung voneinander unterscheiden. Über die unterschiedliche Wärmebehandlung kann die Härte gezielt beeinflusst werden, sodass beispielsweise der Nebensperrring härter und damit verschleißärmer ausgestaltet ist als der Hauptsperrring. Es kann jedoch auch vorgesehen sein, dass der Nebensperrring und der Hauptsperrring das gleiche Material aufweisen und unterschiedlich wärmebehandelt werden.

Gemäß einer weiteren Ausführungsform ist die verdrehsichere Verbindung der Spitze mit dem Nebensperrring kraftschlüssig und/oder formschlüssig ausgebildet. Die Verbindung kann beispielsweise über eine Schraubverbindung erfolgen, sodass der Nebensperrring besonders stabil verdrehsicher mit der Spitze verbunden ist. Die zumindest in Umfangsrichtung formschlüssige Verbindung kann beispielsweise über eine ein Ineinandergreifen mindestens eines Vorsprungs des Nebensperrrings in mindestens eine Aussparung der Spitze realisiert werden. Ein derartiger Vorsprung kann beispielsweise als Klauenelement des Nebensperrrings und eine derartige Aussparung kann beispielsweise zwischen zwei Flügelelementen der Spitze ausgebildet sein. Es kann auch eine Kombination von Kraftschluss und Formschluss vorgesehen sein. Weiterhin kann beispielsweise eine formschlüssige Verbindung von Klauenelement und Flügelelement zusätzlich mit einer Schraubverbindung kombiniert sein. Durch die kraftschlüssige und/oder formschlüssige verdrehsichere Verbindung sind die Spitze und der Nebensperrring besonders stabil auch bei Lastschlägen ausgestaltet, wobei Unwuchten während der Drehung der erfindungsgemäßen Rückstromsperre reduziert werden. Gleichzeitig wird das Ausrichten von Nebensperrring und Spitze zueinander vereinfacht.

Gemäß einer weiteren Ausführungsform weist der Schaft eine Vielzahl von Längsnuten auf, wobei die Vielzahl von Längsnuten den Durchströmungskanal erweitert. Dabei ist eine Längsnut bevorzugt zwischen zwei Flügelelementen der Spitze angeordnet, sodass während eines Einspritzvorgangs das Fertigungsmaterial durch den Durchströmungskanal und entlang der Längsnuten zwischen den Flügelelementen in Richtung Spitzenende gedrückt wird. Die Längsnuten sind dabei vorzugsweise entlang des Umfangs des Schaftes gleichmäßig zueinander verteilt. Beispielsweise können sechs Längsnuten um jeweils 60° zueinander versetzt und gleichmäßig an dem Schaft angeordnet sein.

Die Vielzahl an Längsnuten bewirkt, dass das Fertigungsmaterials annähernd gleichmäßig innerhalb der Rückstromsperre verteilt wird und somit gleichmäßig in Richtung Düse gefördert werden kann. Durch die Düse kann das Fertigungsmaterial dann wiederum annähernd gleichmäßig in eine gewünschte Form gespritzt werden, sodass die Teile, die mit einer Plastifiziereinheit gefertigt werden, die über die Rückstromsperre verfügt, eine verbesserte Qualität aufweisen.

Gemäß einer weiteren Ausführungsform ist der Nebensperrring einteilig mit der Spitze ausgebildet. Bei einer derartigen Ausführungsform weist die Spitze kein Flügelelement auf. Der Durchströmungskanal ist durch den Hohlraum zwischen Schaft und Hauptsperrring und zusätzlich durch mindestens eine als Fließkanal ausgestaltete Durchgangsbohrung gebildet, die mit dem Hohlraum verbunden ist. Diese Durchgangsbohrung erstreckt sich axial von dem Hohlraum zwischen dem Hauptsperrring und dem Schaft durch die Spitze hindurch, die einteilig mit dem Nebensperrring ausgebildet ist. Am Spitzenende, das der Düse zugewandt ist, kann dann das Fertigungsmaterial durch die mindestens eine Durchgangsbohrung hindurch austreten. Die Durchgangsbohrung kann einen halbmondförmigen Querschnitt aufweisen und zweifach an dem einteilig mit der Spitze ausgebildete Nebensperrring angeordnet sein. Die zwei halbmondförmigen Durchgangsbohrungen sind dabei um 180° entlang der Umfangsfläche zueinander versetzt bzw. radial gegenüberliegend angeordnet. Durch die einteilige Ausbildung von Nebensperrring und Spitze werden die zuvor beschriebenen Ausführungsformen des Nebensperrrings nicht weiter beeinflusst. Beispielsweise kann weiterhin die Längsachse des Schaftes und die mit der Anlagefläche oder der Stützfläche deckungsgleiche Kegelmanteloberfläche einen spitzen Winkel einschließen. Die derartig konstruierte Rückstromsperre ist somit um ein Bauteil reduziert und entsprechend wartungsarm und kompakt ausgestaltet.

Gemäß einem weiteren Aspekt betrifft die Erfindung eine Plastifiziereinheit mit einer Förderschnecke zur Förderung eines fließfähigen Materials, einem Zylinder mit einer Zylinderinnenfläche zur Umhausung der Förderschnecke, einer an einem ersten Ende der Förderschnecke angeordneten Zuführvorrichtung zum Zuführen von fließfähigem Material und einer in einem Bereich eines zweiten Endes der Förderschnecke angeordneten Düse, wobei zwischen der Düse und dem zweiten Ende der Förderschnecke die zuvor beschriebene Rückstromsperre angeordnet ist.

Die Zuführvorrichtung kann beispielsweise als eine einen Behälter aufweisende Einspeisevorrichtung ausgestaltet sein, in der das fließfähige Fertigungsmaterial zunächst gelagert und anschließend der Förderschnecke zugeführt wird. Die Förderschnecke fördert durch eine Drehung um ihre Längsachse das Fertigungsmaterial von der Zuführvorrichtung ausgehend in Richtung Rückstromsperre und Düse. Der in der Regel beheizbare Zylinder umhaust dabei primär die Förderschnecke ist jedoch mit der Zylinderinnenfläche auch gegenüberliegend der Außenfläche des Hauptsperrrings der Rückstromsperre angeordnet. Befindet sich die Rückstromsperre in einer Offenstellung kann das Fertigungsmaterial während eines Dosiervorgangs nahezu ungehindert durch den Durchströmungskanal der Rückstromsperre in einen Schneckenvorraum geführt und dort angesammelt werden. Bei einem anschließenden Einspritzvorgang wirkt die Förderschnecke als Ausstoßkolben und wird in Richtung der Düse verschoben. Der Hauptsperrring der Rückstromsperre wird dadurch relativ zu dem Schaft axial in eine Schließstellungverschoben, in der der Hauptsperrring an dem Druckring dichtend anliegt. In der Schließstellung trennt die Rückstromsperre den Schneckenvorraum und den Schneckenrückraum räumlich voneinander ab. Ein Fließen von Fertigungsmaterial zwischen diesen Räumen ist bei geschlossener Rückstromsperre nicht mehr möglich, sodass der Einspritzvorgang erfolgen kann. Dazu wird die Förderschnecke samt Rückstromsperre weiter axial in Richtung der Düse verfahren und das angesammelte Fertigungsmaterial in Richtung eines Düsenausgangs gedrückt, sodass es über die Düse in eine Form eingespritzt werden kann.

Die erfindungsgemäße Plastifiziereinheit weist durch die Anordnung der Rückstromsperre einen verringerten Verschleiß auf, sodass die Wartungskosten reduziert, die Standzeit erhöht und infolgedessen die Produktivität der Plastifiziereinheit gesteigert werden kann.

Gemäß einer weiteren Ausführungsform liegt die Außenfläche des Hauptsperrrings abdichtend an der Innenfläche des Zylinders an. Durch das Abdichten kontaktiert die Außenfläche der Hauptsperrrings zwar mit der Innenfläche des Zylinders, sodass dies bei einer axialen Bewegung der Rückstromsperre zu Reibung führt. Jedoch ist ein Verschleiß sowohl an der Innenfläche des Zylinders als auch an der Außenfläche des Hauptsperrrings deutlich reduziert, da ein wesentlicher Anteil des Verschleißes, der aus der Drehbewegung und der axialen Verschiebung der Förderschnecke resultiert, auf eine Anlagefläche des Hauptsperrrings bzw. eine Stützfläche des Nebensperrrings übergeht.

Im Folgenden wird unter Bezugnahme auf die nachfolgenden Figuren die Erfindung näher erläutert.

Es zeigen:
- Figur 1a:: eine Seitenansicht einer ersten Ausführungsform der erfindungsgemäßen Rückstromsperre;
- Figur 1b:: eine Schnittansicht der ersten Ausführungsform der erfindungsgemäßen Rückstromsperre;
- Figur 2:: eine Schnittansicht einer zweiten Ausführungsform der erfindungsgemäßen Rückstromsperre;
- Figur 3a:: eine perspektivische Ansicht einer dritten Ausführungsform der erfindungsgemäßen Rückstromsperre;
- Figur 3b:: eine Vorderseitenansicht der dritten Ausführungsform der erfindungsgemäßen Rückstromsperre;
- Figur 3c:: eine Schnittansicht der dritten Ausführungsform der erfindungsgemäßen Rückstromsperre;
- Figur 4:: eine Schnittansicht einer vierten Ausführungsform der erfindungsgemäßen Rückstromsperre;
- Figur 5a:: eine perspektivische Ansicht einer Ausführungsform eines Nebensperrrings;
- Figur 5b:: eine perspektivische Ansicht einer weiteren Ausführungsform eines Nebensperrrings;
- Figur 6a:: eine perspektivische Ansicht einer fünften Ausführungsform der erfindungsgemäßen Rückstromsperre;
- Figur 6b:: eine Schnittansicht der fünften Ausführungsform der erfindungsgemäßen Rückstromsperre;
- Figur 7:: eine schematische perspektivische Schnittdarstellung einer erfindungsgemäßen Plastifiziereinheit.

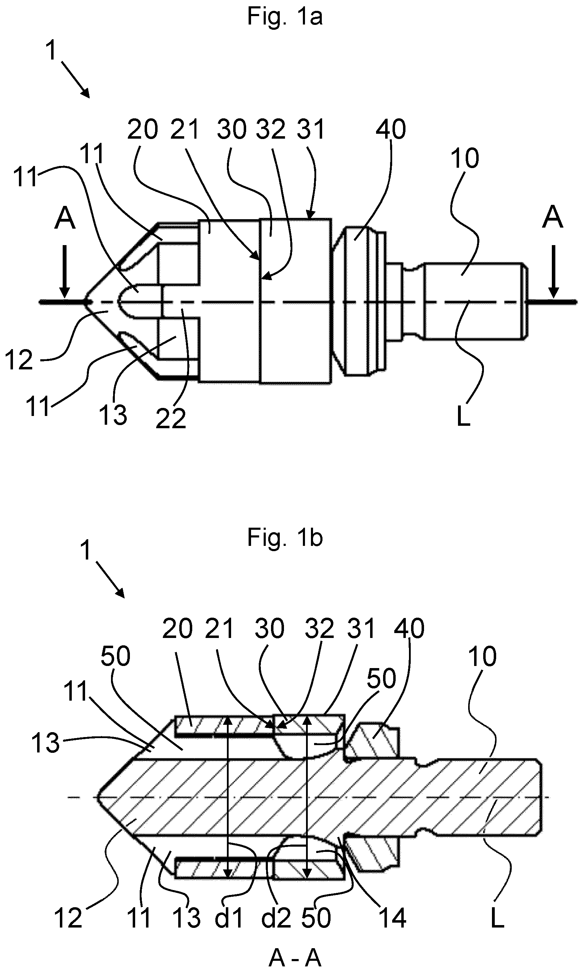

Figur 1a zeigt eine Seitenansicht einer ersten Ausführungsform der erfindungsgemäßen Rückstromsperre 1. In der Figur 1b ist eine Schnittansicht der ersten Ausführungsform der Rückstromsperre 1 dargestellt. Die Figuren 1a und 1b werden nachfolgend gemeinsam beschrieben. Die Rückstromsperre 1 weist einen Schaft 10 mit einer Längsachse L und eine an einem Ende des Schaftes 10 angeordneten Spitze 12 auf. Die Spitze 12 weist mehrere Längsnuten 11 sowie mehrere Flügelelemente 13 auf. Auf dem Schaft 10 ist ein Nebensperrring 20 mit einer stirnseitigen Stützfläche 21, ein Hauptsperrring 30 mit einer Außenfläche 31 und einer stirnseitigen Anlagefläche 32 sowie ein Druckring 40 angeordnet. Der Nebensperrring 20 weist dabei einen Außendurchmesser d1 auf, der kleiner ist als ein Außendurchmesser d2 des Hauptsperrrings. Dies hat zur Folge, dass der Nebensperrring 20 nicht mit einer Zylinderinnenwand einer Plastifiziereinheit (nicht dargestellt) kontaktiert und die Zylinderinnenwand infolgedessen weniger verschleißt. Der Nebensperrring 20 ist ferner über ein Klauenelement 22 mit der Spitze 12 verdrehsicher und formschlüssig verbunden. Das eine der Klauenelemente 22 ragt zwischen zwei Flügelelementen 13 hinein, sodass eine Drehung der Spitze 13 um die Längsachse L zu einer Drehung des Nebensperrrings 20 führt. Die Angaben axial, radial und in Umfangsrichtung beziehen sich auf die Längsachse L, sofern nicht anders angegeben.

Axial benachbart zu dem Nebensperrring 20 ist der Hauptsperrring 30 derartig angeordnet, dass die Stützfläche 21 des Nebensperrrings 20 und die Anlagefläche 32 des Hauptsperrrings 30 miteinander kontaktieren. Dreht sich der Schaft 10, der mit einer Förderschnecke einer Plastifiziereinheit (nicht dargestellt) verbindbar ist, während eines Dosiervorgangs um die Längsachse L, so dreht sich mit dem Schaft 10 und der Spitze 12 auch der an der Spitze 12 verdrehsicher angeordnete Nebensperrring 20 und kontaktiert zwar mit der Anlagefläche 32 des Hauptsperrrings 30, nicht jedoch mit der Zylinderinnenwand der Plastifiziereinheit. Der Kontakt von Nebensperrring 20 und Hauptsperrring 30 führt zu einer Reibung, die wiederum zu einem Verschleiß der Anlagefläche 32, nicht jedoch zu einem Verschleiß der Zylinderinnenfläche führt. Die Zylinderinnenfläche kann zwar mit der Außenfläche 31 des Hauptsperrrings kontaktieren, jedoch führt dieser Kontakt nur zu einer geringfügigen Reibung.

Die durch die Drehung von Spitze 12 und Nebensperrrings 20 zum Verschleiß neigenden Flächen sind bei der erfindungsgemäßen Rückstromsperre 1 die stirnseitige Stützfläche 21 des Nebensperrrings 20 sowie die mit dieser kontaktierenden stirnseitige Anlagefläche 32 des Hauptsperrrings 30. Insbesondere dem Verschleiß des Nebensperrrings 20 kann jedoch durch eine ein härteres Material, eine Verschleißschutzschicht und/oder durch Wärmebehandlung entgegengewirkt werden. Der Verschleiß des Hauptsperrrings 30 kann dahingehend kompensiert werden, dass dieser kostengünstig und einfach ausgetauscht werden kann, da dieser konstruktiv einfach ausgestaltet ist.

Der Hauptsperrring 30 ist entlang der Längsachse L axial verschiebbar und kann die Rückstromsperre 1 somit in eine Offenstellung während eines Dosiervorgangs oder eine Schließstellung während eines Einspritzvorgangs schalten. In der gezeigten Darstellung befindet sich der Hauptsperrring 30 bzw. die Rückstromsperre 1 in einer Offenstellung, sodass fließfähiges Fertigungsmaterial an einem äußeren Rand des Druckrings 40, innerhalb des Hauptsperrrings 30 und des Nebensperrrings 20 in Richtung Spitze 12 transportiert werden kann. Um nach dem Dosiervorgang den Einspritzvorgang zu gewährleisten, wird der Hauptsperrring 30 axial in Richtung des Druckrings 40 geschoben, bis der Hauptsperrring 30 an dem Druckring 40 anliegt und die Rückstromsperre 1 somit verschließt. Das Leiten von Fertigungsmaterial durch die Rückstromsperre 1 ist in der Schließstellung des Hauptsperrrings 30 nicht mehr möglich, sodass der Einspritzvorgang beginnen kann. Ferner kann sich der Nebensperrring 20 in der Schließstellung zusammen mit dem Hauptsperrring 30 axial verschieben, sodass keine unerwünschten Räume zwischen den Bauteilen entstehen. Die erfindungsgemäße Rückstromsperre 1 ist daher auch besonders kompakt ausgestaltet.

Durch die Längsachse L des Schaftes 10 verläuft ferner eine Schnittebene A - A, entlang derer die Rückstromsperre gemäß der ersten Ausführungsform in Figur 1b geschnitten dargestellt ist. Die Schnittansicht zeigt, dass die Rückstromsperre 1 bzw. der Hauptsperrring 30 weiterhin in einer Offenstellung dargestellt sind. Zwischen dem Schaft 10 mit der Längsnut 11 sowie dem Nebensperrring 20 und dem Hauptsperrring 30 ist ein Durchströmungskanal 50 ausgebildet. Der Durchströmungskanal 50 erstreckt sich in Umfangrichtung um den Schaft 10 bzw. innerhalb des Nebensperrrings 20 und des Hauptsperrrings 30. Gemäß der in Figur 1b gezeigten Ausführungsform ist der Nebensperrring 20 axial innengeführt. Die Innenführung wird dabei durch Abschnitte des Schaftes 10 realisiert, ist jedoch teilweise durch die Längsnuten 11 unterbrochen, wie in der dargestellten Schnittansicht erkennbar ist. Eine Längsnut 11 verläuft dabei zwischen einem Paar von Flügelelementen 13, wobei von je einem Paar von Flügelelementen 13 in der dargestellten Schnittansicht ein Flügelelement 13 oberhalb und ein Flügelelement 13 unterhalb der Längsachse L dargestellt ist.

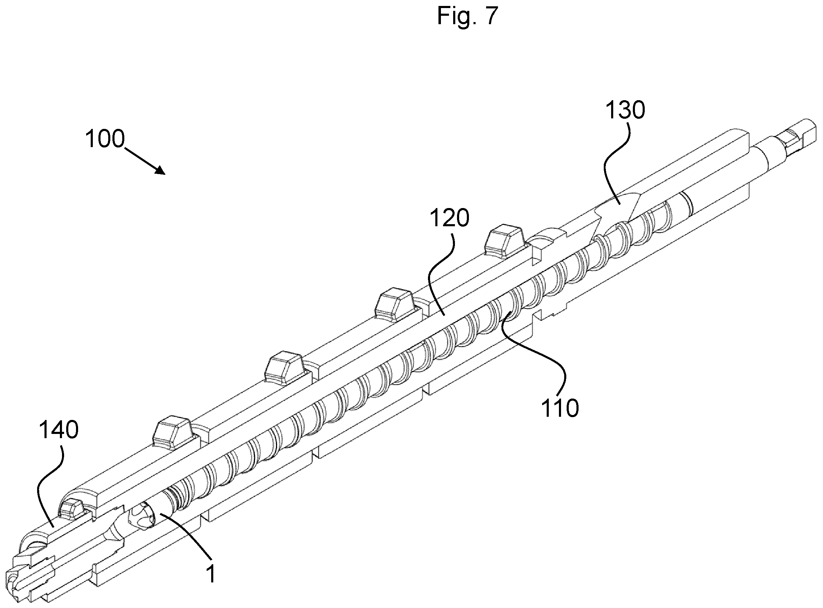

Der Schaft 10 weist ferner einen Anschlag 14 auf, an dem der Druckring 40 mit einer Stirnseite anliegt. Der Druckring 40 ist axial zwischen dem Anschlag 14 und der hier nicht dargestellten Förderschnecke 110 (Figur 7) angeordnet.

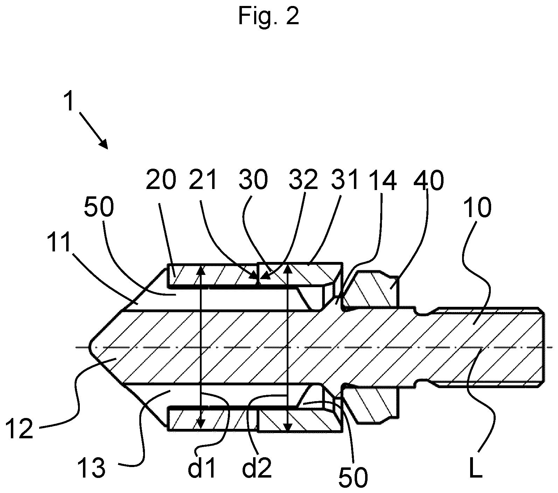

Figur 2 zeigt eine Schnittansicht einer zweiten Ausführungsform der erfindungsgemäßen Rückstromsperre. Bezüglich der bereits erwähnten Merkmale wird zur Vermeidung von Wiederholungen auf die Ausführungen zu den Figuren 1a und 1b verwiesen. Die in Figur 2 dargestellte zweite Ausführungsform unterscheidet sich von der ersten Ausführungsform dadurch, dass der Hauptsperrring 30 zusammen mit dem Nebensperrring 20 teilweise axial entlang des Schaftes 10 innengeführt ist. Demnach kontaktiert der Hauptsperrring 20 zusätzlich zu einer Führung über die Außenfläche 31 an einer Zylinderinnenfläche (nicht dargestellt) auch über eine Innenfläche mit dem Schaft 10. Die Rückstromsperre 1 ist somit besonders stabil ausgestaltet und ein Spiel des Hauptsperrrings 30 orthogonal zur Längsachse L wird vorteilhaft reduziert.

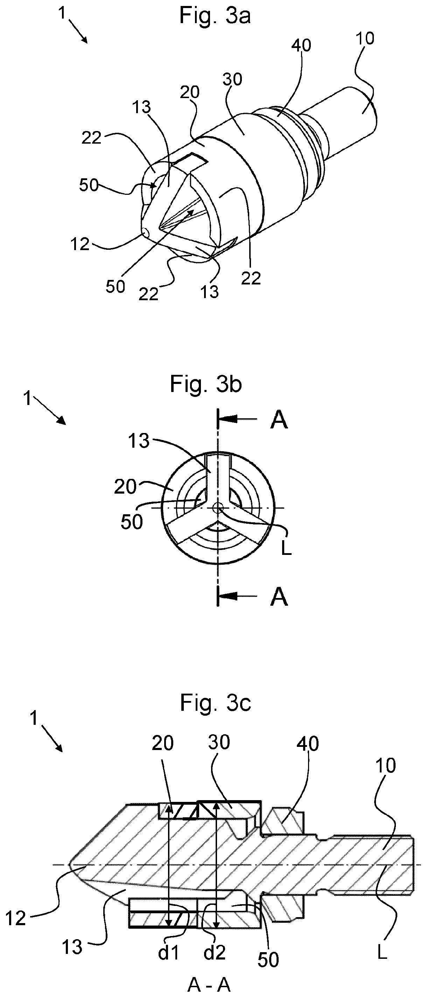

Figur 3a zeigt eine perspektivische Ansicht einer dritten Ausführungsform der erfindungsgemäßen Rückstromsperre 1, bei der der Hauptsperrring 30 in einer Offenstellung dargestellt ist. Die dargestellte Ausführungsform weist eine Spitze 12 mit drei Flügelelementen 13 sowie einen Nebensperrring 20 mit drei Klauenelementen 22 auf, wobei die Klauenelemente 22 mit den Flügelelementen 13 der Spitze 11 in Umfangsrichtung formschlüssig verbunden sind. Dazu greifen die Flügelelemente 13 jeweils in eine Aussparung zwischen jeweils zwei Klauenelementen 22, sodass die Spitze 12 und der Nebensperrring 20 besonders stabil und verdrehsicher zueinander angeordnet sind. Durch die Flügelelemente 13 wird der Durchströmungskanal 50 ferner axial in drei Teilbereiche unterteilt.

In Figur 3b ist eine Vorderseitenansicht der dritten Ausführungsform der erfindungsgemäßen Rückstromsperre 1 gezeigt, die verdeutlicht, wie die drei Flügelelemente 13 gleichmäßig radial um die Längsachse L um jeweils 120° versetzt zueinander angeordnet sind. Ferner zeigt Figur 3b eine mittig vertikal angeordnete und durch die Längsachse L verlaufende Schnittebene A - A, entlang derer die Rückstromsperre 1 gemäß der dritten Ausführungsform in Figur 3c geschnitten dargestellt ist.

Figur 3c zeigt diese Schnittansicht der dritten Ausführungsform der erfindungsgemäßen Rückstromsperre 1, wobei verdeutlicht wird, dass der Nebensperrring 20 durch den Schaft 10 innengeführt ist und dass die Flügelelemente 13 der Spitze 12 mit dem Nebensperrring 20 stirnseitig kontaktierend sind. Ferner ist der Durchströmungskanal 50 derartig ausgebildet, dass dieser etwa parallel zu einer Innenfläche des Hauptsperrrings 30 und zu einer Innenfläche des Nebensperrrings 20 verläuft, wodurch das Fertigungsmaterial während einer Einspritzvorgangs besonders widerstandsarm in Richtung einer Düse gedrückt werden kann.

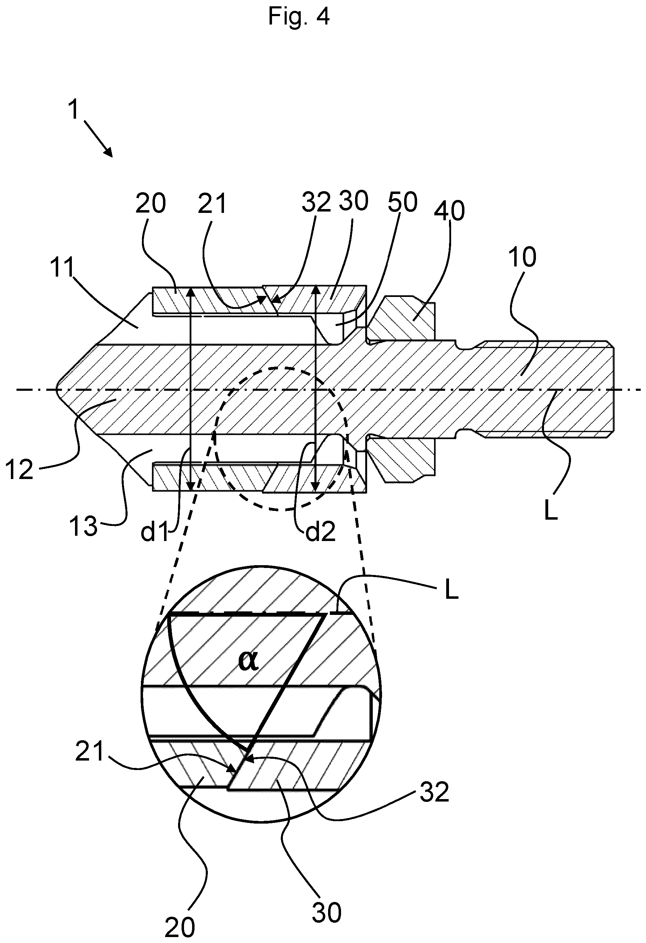

Figur 4 zeigt eine Schnittansicht einer vierten Ausführungsform der erfindungsgemäßen Rückstromsperre 1, bei der die Längsachse L des Schaftes 10 und eine mit der Anlagefläche 32 bzw. der Stützfläche 21 deckungsgleiche Kegelmanteloberfläche einen spitzen Winkel α einschließen. Durch diese Anordnung von Nebensperrring 20 und Hauptsperrring 30 zueinander wird die kontaktierende Fläche der Anlagefläche 32 und der Stützfläche 21 vergrößert. Eine Kraft, die infolge eines Dosierungs- oder Einspritzvorgangs resultiert, wirkt somit auf diese vergrößerte kontaktierende Fläche, sodass der Druck auf die Anlagefläche 32 und Stützfläche 21 entsprechend verringert wird. Durch den verringerten Druck wird ferner der Verschleiß an diesen Flächen reduziert. Figur 4 zeigt ferner einen Kreisausschnitt als vergrößertes Detail, aus dem die konkrete Anordnung des spitzen Winkels α hervorgeht. In der dargestellten Ausführungsform beträgt der spitze Winkel α ca. 70°. Der spitze Winkel α kann auch einen anderen, beispielsweise geringeren Wert annehmen, sodass die kontaktierende Fläche weiter vergrößert und der Druck und der Verschleiß weiter abnimmt. Der spitze Winkel α kann statt zu der Spitze 12 auch in entgegengesetzter Richtung geöffnet sein.

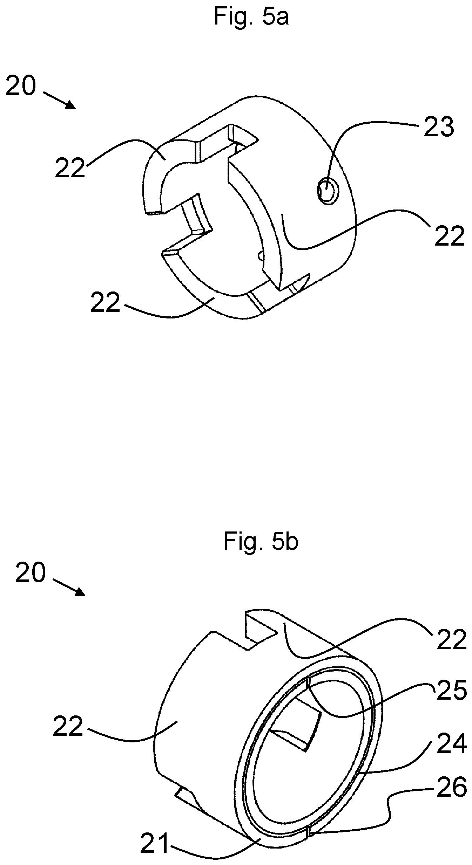

In Figur 5a ist eine perspektivische Ansicht einer Ausführungsform des Nebensperrrings 20 gezeigt, der neben drei Klauenelementen 22 eine radiale Bohrung 23 aufweist, die dazu ausgebildet sind, den Durchströmungskanal 50 zu erweitern. Durch eine derartige Erweiterung kann Fertigungsmaterial von dem Durchströmungskanal 50 in einen Außenbereich gelangen, der zwischen der Außenfläche der Nebensperrrings 20 und der Innenfläche des Zylinders angeordnet ist. Das Fertigungsmaterial kann infolgedessen nicht mehr ausschließlich durch den etwa parallel zur Längsachse verlaufenden Durchströmungskanal, sondern zusätzlich auch orthogonal zu der Längsachse durch die radiale Bohrung und durch den Außenbereich gedrückt werden. Somit wird der axiale Druck auf den Nebensperrring 20 und den Hauptsperrring vermindert, wodurch wiederum der Verschleiß dieser Bauteile reduziert werden kann.

Figur 5b zeigt eine perspektivische Ansicht einer weiteren Ausführungsform eines Nebensperrrings 20, gemäß derer die Stützfläche 21 eine Schmiernut 24 zur Bereitstellung einer Schmierung aufweist. Das Schmiermittel kann beispielsweise das Fertigungsmaterial oder ein gängiges Schmiermittel sein. In der dargestellten Ausführungsform ist die Schmiernut 24 ringförmig und mittig verlaufend innerhalb der Stützfläche 21 angeordnet. Ferner weist die Schmiernut 24 einen Zulauf 25 und einen Ablauf 26 zur Verteilung des Schmiermittels auf. Über den Zulauf 25 kann beispielsweise Fertigungsmaterial, das als Schmiermittel fungiert, zunächst von dem Durchströmungskanal in die Schmiernut 24 gelangen und somit die Stützfläche 21 und ggfs. die Anlagefläche des Hauptsperrrings ausreichend schmieren. Anschließend kann das Schmiermittel über den Ablauf 26 entlang der Außenfläche des Nebensperrrings 20 verteilt werden. Die Ausführungsformen des Nebensperrrings 20 gemäß Figur 5a und Figur 5b können auch miteinander kombiniert werden.

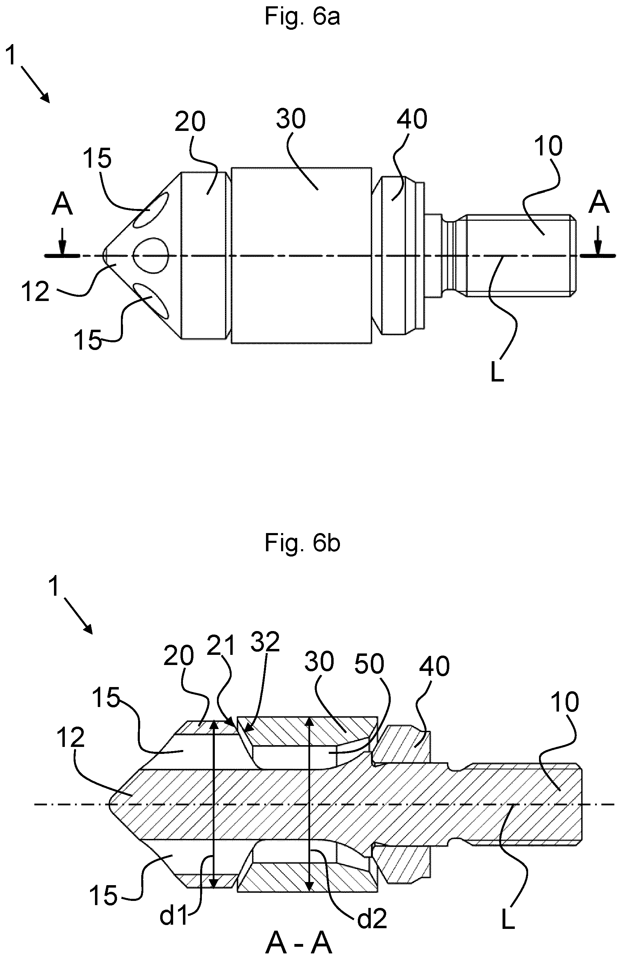

Figur 6a zeigt eine Seitenansicht einer fünften Ausführungsform der erfindungsgemäßen Rückstromsperre 1, bei der der Nebensperrring 20 einteilig mit der Spitze 12 ausgebildet ist. In der dargestellten Ansicht ist die Rückstromsperre 1 mit dem Hauptsperrring 30 in der Offenstellung gezeigt. Die Spitze 12 weist mehrere Durchgangsbohrungen 15 auf, die Teil des Durchströmungskanals sind. Auch bei der einteiligen Ausgestaltung von Nebensperrring 20 und Spitze 12 weist der Nebensperrring 20 den geringeren Außendurchmesser d1 gegenüber dem größeren Außendurchmesser d2 des Hauptsperrrings 30 auf, sodass die bereits erwähnten Vorteile insbesondere in Bezug auf den reduzierten Verschleiß auch bei dieser Ausführungsform vorhanden sind. Ferner ist die dargestellte Ansicht horizontal durch die Längsachse L entlang der Schnittebene A-A geschnitten.

In Figur 6b ist diese Schnittansicht der fünften Ausführungsform der erfindungsgemäßen Rückstromsperre 1 dargestellt, wobei erkennbar ist, dass die Durchgangsbohrungen 15 den Durchströmungskanal 50 mit ausbilden. Ferner schließen die Längsachse L des Schaftes und eine mit der Stützfläche 21 oder der Anlagefläche 32 deckungsgleiche Kegelmanteloberfläche einen spitzen Winkel ein, sodass die kontaktierende Fläche zwischen Nebensperrring 20 und Hauptsperrring 30 vorteilhaft vergrößert ist. Infolgedessen wird der Verschleiß an der Stützfläche 21 und der Anlagefläche 32 verringert.

Figur 7 zeigt eine perspektivische schematische Schnittdarstellung einer erfindungsgemäßen Plastifiziereinheit 100 mit einer Förderschnecke 110, einem die Förderschnecke 110 umhausenden Zylinder 120, einer an einem ersten Ende der Förderschnecke 110 angeordneten Zuführvorrichtung 130 und einer an einem zweiten Ende der Förderschnecke 130 angeordneten Düse 140, wobei zwischen der Düse 140 und dem zweiten Ende der Förderschnecke 130 eine Rückstromsperre 1 angeordnet ist. Die Zuführvorrichtung 130 ist schematisch durch eine Aussparung in dem Zylinder 120 angedeutet, soll jedoch verdeutlichen, dass durch diese Aussparung an dem ersten Ende der Förderschnecke 110 das fließfähige Fertigungsmaterial zugeführt wird. Durch eine Drehung um die Längsachse transportiert die Förderschnecke 110 das zugeführte Fertigungsmaterial in Richtung der Rückstromsperre 1. Durch den Zylinder 120 wird die Förderschnecke 110 umhaust, sodass das durch die Förderschnecke 110 transportierte Fertigungsmaterial nicht entweichen kann.

Das Fertigungsmaterial wird durch die Drehung der Förderschnecke 110 durch die Rückstromsperre 1 transportiert, die sich zu diesem Zweck in einer Offenstellung befindet. Nach dem Passieren der Rückstromsperre 1 gelangt das Fertigungsmaterial während eines Dosiervorgangs in den Bereich der Düse 140. Ist dieser Bereich mit ausreichend Fertigungsmaterial befüllt, wird die Rückstromsperre 1 in eine Schließstellung geschalten, indem die Förderschnecke 110 in Richtung der Düse 140 gedrückt wird. Die nicht rotierende Förderschnecke 110 wird wie ein Kolben mit der geschlossenen Rückstromsperre 1 weiter in Richtung der Düse 140 verschoben, sodass das Fertigungsmaterial, das zuvor im Bereich der Düse 140 angesammelt wurde, während eines Einspritzvorgangs durch die Düse 140 in eine Spritzgießform gespritzt werden kann.

Durch die Integrierung der erfindungsgemäßen Rückstromsperre 1 in die Plastifiziereinheit 100 wird sowohl der Verschleiß an der Innenfläche des Zylinders 120 der Plastifiziereinheit 100 als auch der Verschleiß an dem Hauptsperrring, dem Nebensperrring und der Spitze der Rückstromsperre 1 deutlich reduziert.

### Bezugszeichenliste

- 1: Rückstromsperre
- 10: Schaft
- 11: Längsnut
- 12: Spitze
- 13: Flügelelement
- 14: Anschlag
- 15: Durchgangsbohrung
- 20: Nebensperrring
- 21: Stützfläche
- 22: Klauenelement
- 23: Radiale Bohrung
- 24: Schmiernut
- 25: Zulauf
- 26: Ablauf
- 30: Hauptsperrring
- 31: Außenfläche
- 32: Anlagefläche
- 40: Druckring
- 50: Durchströmungskanal
- 100: Plastifiziereinheit
- 110: Förderschnecke
- 120: Zylinder
- 121: Zylinderinnenfläche
- 130: Zuführvorrichtung
- 140: Düse
- L: Längsachse
- α: Spitzer Winkel

## Patentansprüche

1. Rückstromsperre (1) für eine Plastifiziereinheit aufweisend:
- einen Schaft (10) mit einer Längsachse (L), mindestens einer Längsnut (11) und einer an einem Ende des Schaftes (10) angeordneten Spitze (12);
- einen axial verschiebbaren Nebensperrring (20) mit einem Außendurchmesser d1 und einer stirnseitigen Stützfläche (21),
wobei der Nebensperrring (20) verdrehsicher mit der Spitze (12) verbunden ist;
- einen axial verschiebbaren Hauptsperrring (30) mit einer Außenfläche (31), einem Außendurchmesser d2 und einer stirnseitigen Anlagefläche (32), die gegenüber der Stützfläche (21) abstützbar ist,
wobei der Außendurchmesser d2 des Hauptsperrrings (30) größer ist als der Außendurchmesser d1 des Nebensperrrings (20);
- einen auf dem Schaft (10) abdichtend angeordneter Druckring (40),
wobei der Hauptsperrring (30) zwischen dem Nebensperrring (20) und dem Druckring (40) angeordnet ist,
wobei ein Durchströmungskanal (50) zwischen dem Schaft (10) mit der Längsnut (11) sowie dem Nebensperrring (20) und dem Hauptsperrring (30) ausgebildet ist,
wobei der Hauptsperrring (30) zwischen einer Offenstellung während eines Dosiervorgangs und einer Schließstellung während eines Einspritzvorgangs axial verschiebbar ist,
wobei der Hauptsperrring (30) in der Offenstellung zu dem Druckring (40) beabstandet ist, wobei der Hauptsperrring (30) in der Schließstellung an dem Druckring (40) anliegt, und
wobei der Nebensperrring (20) zumindest abschnittsweise entlang des Schafts (10) innengeführt ist.

2. Rückstromsperre nach Anspruch 1, **dadurch gekennzeichnet, dass** der Hauptsperrring (30) zumindest abschnittsweise axial entlang des Schaftes (10) innengeführt ist.

3. Rückstromsperre nach einem der vorherigen Ansprüche, **dadurch gekennzeichnet, dass** die Längsachse (L) des Schaftes (10) und eine mit der Anlagefläche (32) oder der Stützfläche (21) deckungsgleiche Kegelmanteloberfläche einen spitzen Winkel (α) einschließen.

4. Rückstromsperre nach einem der vorherigen Ansprüche, **dadurch gekennzeichnet, dass** die Spitze (12) mindestens ein Flügelelement (13) aufweist, wobei das mindestens eine Flügelelement (13) den Durchströmungskanal (50) axial unterteilt.

5. Rückstromsperre nach einem der vorherigen Ansprüche, **dadurch gekennzeichnet, dass** der Nebensperrring (20) mindestens ein Klauenelement (22) aufweist, wobei das mindestens eine Klauenelement (22) mit dem mindestens einen Flügelelement (13) der Spitze (12) formschlüssig verbindbar ist.

6. Rückstromsperre nach einem der vorherigen Ansprüche, **gekennzeichnet durch** eine Anzahl n der Flügelelemente (13) der Spitze (12) und eine Anzahl m der Klauenelemente (22) des Nebensperrrings (20), wobei die Anzahl n der Flügelelemente (13) der Anzahl m der Klauenelemente (22) entspricht.

7. Rückstromsperre nach einem der Ansprüche 1 bis 5, **gekennzeichnet durch** eine Anzahl n der Flügelelemente (13) der Spitze (12) und eine Anzahl m der Klauenelemente (22) des Nebensperrrings (20), wobei die Anzahl n der Flügelelemente (13) nicht der Anzahl m der Klauenelemente (22) entspricht.

8. Rückstromsperre nach einem der vorherigen Ansprüche, **dadurch gekennzeichnet, dass** der Nebensperrring (20) mindestens eine radiale Bohrung (23) aufweist, wobei die mindestens eine radiale Bohrung (23) den Durchströmungskanal (50) erweitert.

9. Rückstromsperre nach einem der vorherigen Ansprüche, **dadurch gekennzeichnet, dass** die Stützfläche (21) des Nebensperrrings (20) und/oder die Anlagefläche (32) des Hauptsperrrings (30) eine Schmiernut (24) zur Bereitstellung eines Schmiermittels für die Stützfläche (21) und/oder die Anlagefläche (32) aufweisen bzw. aufweist.

10. Rückstromsperre nach Anspruch 9, **dadurch gekennzeichnet, dass** die Schmiernut (24) mindestens einen Zulauf (25) und mindestens einen Ablauf (26) zur Verteilung des Schmiermittels aufweist.

11. Rückstromsperre nach einem der vorherigen Ansprüche, **dadurch gekennzeichnet, dass** der Nebensperrring (20) ein Material aufweist, das sich von dem Material des Hauptsperrrings (30) unterscheidet.

12. Rückstromsperre nach einem der vorherigen Ansprüche, **dadurch gekennzeichnet, dass** der Schaft (10) eine Vielzahl von Längsnuten (11) aufweist, wobei die Vielzahl von Längsnuten (11) den Durchströmungskanal (50) erweitert.

13. Rückstromsperre nach einem der vorherigen Ansprüche, **dadurch gekennzeichnet, dass** der Nebensperrring (20) einteilig mit der Spitze (12) ausgebildet ist.

14. Plastifiziereinheit (100) aufweisend
- eine Förderschnecke (110) zur Förderung eines fließfähigen Materials;
- einen Zylinder (120) mit einer Zylinderinnenfläche (121) zur Umhausung der Förderschnecke (110);
- eine an einem ersten Ende der Förderschnecke (110) angeordnete Zuführvorrichtung (130) zum Zuführen von fließfähigem Fertigungsmaterial; und
- eine in einem Bereich eines zweiten Endes der Förderschnecke (110) angeordnete Düse (140),
wobei zwischen der Düse (140) und dem zweiten Ende der Förderschnecke (110) eine Rückstromsperre (1) gemäß einem der Ansprüche 1 bis 13 angeordnet ist.

15. Plastifiziereinheit nach Anspruch 14, **dadurch kennzeichnet, dass** die Außenfläche (31) des Hauptsperrrings (30) abdichtend an der Innenfläche (121) des Zylinders (120) anliegt.
